# EUROPÄISCHE PATENTSCHRIFT

(11) **EP 0 422 610 B1**
(45) Veröffentlichungstag und Bekanntmachung des Hinweises auf die Patenterteilung: **29.12.1993**
(21) Anmeldenummer: 90119414.2
(22) Anmeldetag: 10.10.1990
(51) Int. Cl.: B28D 1/26, B28D 1/00

(54) **Verfahren und Verwendung einer Vorrichtung zur Bearbeitung der Oberflächen vom Werkstücken, vorzugsweise Steinen, durch Brennen oder Stocken**
Process and use of an apparatus for shaping the upper surface of articles, in particular stones, through burning or scabbling
Procédé et utilisation d'un dispositif pour le façonnage de la face supérieure d'éléments, en particulier de pierres, par brûlage ou par bouchardage

(30) Priorität: 10.10.1989 DE 3933843
(43) Veröffentlichungstag der Anmeldung: 17.04.1991
(73) Patentinhaber: Hofmann, Hermann, D-35606 Solms (DE)
(72) Erfinder: Hofmann, Hermann, D-35606 Solms (DE)
(74) Vertreter: Zinnecker, Armin, Dipl.-Ing.

(56) Entgegenhaltungen:
- EP-A- 0 117 585
- DE-A- 3 511 841
- DE-C- 3 723 617
- FR-A- 2 584 965
- US-A- 3 892 153

## Beschreibung

Die Erfindung betrifft ein Verfahren zum Bearbeiten der Oberflächen von Werkstücken, vorzugsweise Steinen, durch Brennen oder Stocken oder einen ähnlichen Oberflächenbearbeitungsvorgang und die Verwendung einer Vorrichtung zur Durchführung eines derartigen Verfahrens.

Natursteine werden zum Zwecke der Herstellung ebener Flächen in Platten unterschiedlicher Dicke geschnitten. Werksteine können diese ebenen Flächen bereits aufgrund ihrer Herstellmethode aufweisen. Zum Zwecke der besseren Fußläufigkeit und aus architektonischen Gründen werden ihre glatten Oberflächen angerauht. Dieses Anrauhen kann auf rein mechanischem Wege - durch Stocken, aber auch durch thermische Behandlung - durch Flammen erfolgen. Zu letztgenannter Behandlungsweise wurden Maschinen entwickelt, die einen Arbeitstisch aus Rollgängen besitzen, über dem eine einzige hin- und herpendelnde Brenner- oder Stockvorrichtung angebracht ist. Der Vorschub der Steinplatten erfolgt bei diesen Maschinen dergestalt, daß die Rollen immer dann in Bewegung gesetzt werden, wenn der Flammenstrahl oder Stockhammer einmal die darunter liegende Fläche passiert hat. Alle auf der Arbeitsebene liegenden Steinplatten werden bei dem Vorschub ruckartig vorbewegt. Diese Bewegung ist in mehrerlei Hinsicht unvorteilhaft. Plötzliches Beschleunigen und Abbremsen führt zu Beschädigungen der Steinplattenränder, Belastungen der Antriebslager, Verzögerungen im Betriebsablauf und ungleicher Oberflächenstruktur (z. B. Streifen), weil dabei durch Drehung der Steinplatten einzelne Punkte stärker und schwächer beflammt werden. Die Rand- und Oberflächenqualität leidet darunter. Weiterhin werden die unter dem Brennstrahl liegenden Rollgänge immer dann von der Flamme sehr direkt getroffen, stark belastet und geschädigt, wenn bei dem Weitertransport die Flamme durch die Steinlücken hindurchtritt.

Bei den Stockmaschinen kann es vorkommen, daß der Stockhammer mehrmals die gleiche Fläche trifft. Bei beiden Maschinenarten kann es vorkommen, daß ganze Flächenteile überhaupt nicht berührt werden.

Ein weiterer Nachteil besteht bei diesen Maschinen in der Rollgangantriebsmechanik. Die bisher verwendeten Antriebsketten sind so geschaltet, daß immer zwei Rollen über eine Gall'sche Kette miteinander verbunden sind, wobei eine Rolle treibende und angetriebene Funktion hat. Da jeder Zahn eines Zahnrades ein gewisses Spiel aufweist, kann die Summe, bei einer entsprechend langen Rollenbahn, zu einem zeitweisen, unbeabsichtigten Stillstand mit entsprechend schädlichen Folgen führen. Bei bisherigen Brennmaschinen mit einer Brennerdüse ist diese in Richtung der Bewegung des zu bearbeitenden Werkstückes so ausgerichtet, daß durch Schrägstellung - in einem dem jeweils zu bearbeitenden Material angepaßten Anstellwinkel - der sogenannte Abbrand in die Richtung des Transportes wegspritzt. Unvorteilhaft ist weiterhin, daß die bekannten Maschinen jeweils nur einen Support und eine Brennerdüse aufweisen. Der Grund hierfür besteht darin, daß auf Grund des die Brennerdüsen zur Kühlung umgebenden Kühlmantels bei der Anordnung mehrerer Düsen nebeneinander die Abstände zwischen diesen Düsen so groß werden, daß unbeabsichtigt unbearbeitete Stellen auf den Oberflächen entstehen.

Aus der DE-OS 35 11 841 ist ein Verfahren und eine Vorrichtung zur Oberflächengestaltung von Betonfertigteilen, insbesondere Betonsteinen, bekannt, bei dem die Oberfläche der Betonfertigteile unmittelbar nach ihrer Herstellung - in frischem, noch nicht abgebundenem Zustand - durch Flammstrahlen behandelt wird.

Aus der DE-PS 37 23 617 ist ein Verfahren und eine Vorrichtung zum Herstellen einer imitierten Solnhofer-Marmorstruktur bekannt, bei dem ein Stockwerkzeug zum Einsatz kommt. Das Stockwerkzeug besitzt eine Vielzahl von Meißelschneiden, die in einer kreisenden Bewegung geführt und zum rhythmischen Tanzen gebracht wird.

Ein Verfahren und eine Vorrichtung zur Durchführung dieses Verfahrens ist aus der FR-OS 25 84 965 bekannt. Die dort beschriebene Vorrichtung dient zum Polieren von Steinen. Die Polierwerkzeuge sind an einem quer zur Werkstück-Förderrichtung bewegbaren Support angeordnet. Einige der Polierwerkzeuge können auf diesem Support in Werkstück-Förderrichtung bewegt werden. Die Anordnung kann in kinematischer Umkehr auch derart getroffen sein, daß ein Polierwerkzeug auf einem in Werkstück-Förderrichtung bewegbaren Support angeordnet ist, der mit einem quer zur Werkstück-Förderrichtung bewegbaren Schlitten verbunden ist. Die überwiegende Anzahl der Polierwerkzeuge wird lediglich quer zur Förderrichtung der Werkstücke bewegt. Eine Überlagerung mit einer Bewegung in Werkstück-Förderrichtung findet bei diesen Polierwerkzeugen nicht statt, so daß sie auf der Werkstück-Oberfläche eine Zickzacklinie beschreiben. Nur bei einigen Polierwerkzeugen wird der Bewegung quer zur Werkstück-Förderrichtung eine Bewegung in Werkstück-Förderrichtung überlagert. Dies geschieht in der Weise, daß diese Polierwerkzeuge relativ zu dem in Längsrichtung bewegten Werkstück keine Bewegung in Werkstück-Längsrichtung ausführen, so daß sie mehrmals dieselbe Bahn auf dem Werkstück in Werkstück-Querrichtung beschreiben. Der Zweck dieser Maßnahme besteht darin, die Polierwirkung auf dem Werkstück zu vergleichmäßigen, insbesondere in den in Längsrichtung liegenden Endbereichen der Werkstücke.

Aufgabe der Erfindung ist es, ein Verfahren und die Verwendung einer Vorrichtung der eingangs angegebenen Art vorzuschlagen, die eine kontinuierliche Bearbeitung der Oberflächen der Steine ermöglichen.

Bei einem Verfahren der eingangs angegebenen Art wird diese Aufgabe durch die im Anspruch 1 angegebenen Merkmale gelöst. Der Brenner bzw. das Stockwerkzeug bzw. das sonstige Oberflächenbearbeitungswerkzeug wird quer zur Förderrichtung der Werkstücke (Steine) bewegt. Dieser Querbewegung des Brenners bzw. des Stockwerkzeugs bzw. des sonstigen Oberflächenbearbeitungswerkzeugs wird eine Bewegung in Förderrichtung der Werkstücke überlagert, deren Geschwindigkeit der Geschwindigkeit in Förderrichtung der Werkstücke (Steine) entspricht. Die überlagerte Vorschubgeschwindigkeit für das Werkzeug in Förderrichtung der Werkstücke ist also im wesentlichen genauso groß wie die Vorschubbewegung der Werkstücke. Hierdurch wird bewirkt, daß die Oberflächen der Werkstücke im Endergebnis genauso bearbeitet werden, wie wenn sie nicht bewegt würden und wie wenn nur eine Querbewegung des Werkzeugs vorhanden wäre. Die Vorschubgeschwindigkeiten sind im wesentlichen gleich groß bzw. synchronisiert: Die überlagerte Vorschubgeschwindigkeit des Werkzeugs ist im wesentlichen genauso groß wie die Werkstück- Vorschubgeschwindigkeit. Eine kontinuierliche Bearbeitung der Werkstückoberflächen wird hierdurch ermöglicht. Ein Anhalten und Beschleunigen der Werkstücke ist nicht mehr erforderlich. Das erfindungsgemäße Verfahren und die erfindungsgemäße Vorrichtung arbeiten vielmehr ohne Stillstand bzw. ohne Stillstandzeiten, so daß ein sparsamerer (energiesparender) und schnellerer (effektiverer) Betrieb möglich sind.

Der Brenner bzw. das Stockwerkzeug bzw. das sonstige Oberflächenbearbeitungswerkzeug wird nach dem Überqueren des Werkstücks entgegen der Werkstück-Förderrichtung zurückgesetzt. Anschließend überquert das Oberflächenbearbeitungswerkzeug das Werkstück erneut mit überlagerter Längsbewegung. Diese Querbewegung nach dem Zurücksetzen erfolgt entgegengesetzt zur Querbewegung vor dem Zurücksetzen, also entgegen der vorherigen Überquerungsrichtung. Die Querbewegung des Werkzeugs wird also umgekehrt. Hierdurch ist es möglich, sowohl die hingehende als auch die hergehende Querbewegung des Werkzeugs zur Bearbeitung auszunutzen.

Durch eine geeignete Abstimmung kann erreicht werden, daß nach einem vollständigen Zyklus, bestehend aus Querbewegung, Zurücksetzen, entgegengesetzter Querbewegung und weiterem Zurücksetzen der Ausgangspunkt des Werkzeugs genau wieder erreicht wird. Das Oberflächenbearbeitungswerkzeug vollzieht dabei - bezogen auf den Maschinenrahmen - eine Diagnonalbewegung von einer Seite zur anderen Seite und umgekehrt. Nach jeder Diagonalbewegung schließt sich eine Rücksetzbewegung an. Nach einem vollständigen Zyklus hat das Oberflächenbearbeitungswerkzeug - bezogen auf den Maschinenrahmen - seinen Ausgangspunkt wieder erreicht. Es versteht sich, daß hierfür folgende Größen aufeinander abgestimmt werden müssen: Die Vorschubgeschwindigkeit des Werkstücks, die Quergeschwindigkeit des Werkzeugs, die Bearbeitungsbreite des Werkstücks bzw. die Bewegungslänge des Werkzeugs in Querrichtung, der Zurücksetzweg. Beim Zurücksetzweg muß weiterhin die Zeit berücksichtigt werden, die das Zurücksetzen in Anspruch nimmt, da während dieser Zeit das Werkstück weiter in Vorschubrichtung bewegt wird. Der gesamte, auf dem Werkstück wirksame Zurücksetzweg des Werkzeugs besteht also aus dem Zurücksetzweg des Werkzeugs, bezogen auf den Maschinenrahmen, und aus dem Weg, den das Werkstück während des Zurücksetzvorgangs auf Grund der nicht unterbrochenen Vorschubbewegung des Werkstücks zurücklegt.

Vorteilhafte Weiterbildungen des erfindungsgemäßen Verfahrens sind in den Unteransprüchen beschrieben.

Das Oberflächenbearbeitungswerkzeug kann derart zurückgesetzt werden, daß die in Querrichtung auf dem Werkstück verlaufenden Bearbeitungsbahnen nahtlos aneinander anschließen. Es ist aber auch möglich, daß das Oberflächenbearbeitungswerkzeug derart zurückgesetzt wird, daß die in Querrichtung auf dem Werkstück verlaufenden Bearbeitungsbahnen sich überlappen oder voneinander beabstandet sind. Wenn die Querbearbeitungsbahnen nahtlos aneinander anchließen, bleibt keine unbearbeitete Fläche zurück und wird auch keine Fläche doppelt bearbeitet. Wenn beabsichtigt wird, eine gewisse Fläche unbearbeitet zu lassen oder eine bestimmte Fläche doppelt zu bearbeiten, um dadurch ein bestimmtes Oberflächenmuster zu erreichen, wird die Zurücksetzung des Oberflächenbearbeitungswerkzeuges entsprechend geändert.

Vorteilhaft ist es, wenn die Form der Werkstücke erkannt wird. Dies kann durch Grenztaster bzw. Grenztasterformationen erfolgen, wobei über dem Rollgang eine Grenztasterformation im Koordinatensystem angeordnet sein kann, die die jeweilige Form des daran vorbeigeführten Werkstücks erkennen kann. Die Vorschubgeschwindigkeit der Werkstücke kann in Abhängigkeit von der Formerkennung gesteuert werden. Die Grenztaster können in einem Koordinatensystem über der zu erkennenden Fläche so installiert werden, daß alle geometrischen Flächenformen erkannt werden können. Die Grenztaster werden jeweils vor Beginn der Bearbeitung auf die gewünschte Werkstückdicke eingestellt. Die Vorrichtung ist in entsprechender Entfernung vom Brenner installiert, so daß infolge Wärme weder eine Beschädigung erfolgt noch Meßfehler auftreten können. Die Formerkennungsvorrichtung schaltet die Brennerdüsen ein und aus bzw. steuert die Bewegungen der Stockwerkzeuge (Stockhämmer). Sie dient der Einsparung von Energie und verhindert die bisher vorhandenen Randbeschädigungen der Steinoberflächen. Der Brenner bzw. das Stockwerkzeug bzw. ggf. das sonstige Oberflächenbearbeitungswerkzeug können beim Zurücksetzen und/oder in Abhängigkeit von der Formerkennung eingeschaltet und ausgeschaltet werden.

Vorzugsweise ist der Brenner bzw. sind die Brennerdüsen schräg auf die Werkstück-Oberfläche gerichtet. Der Anstellwinkel des Brenners bzw. der Brennerdüsen kann veränderbar sein. Der Anstellwinkel kann hierdurch der Werkstoffbeschaffenheit bzw. der Oberflächenbeschaffenheit der Werkstücke angepaßt werden. Vorzugsweise ist der Brenner bzw. sind die Brennerdüsen derart geneigt, daß der Abbrand seitlich über den Werkstückrand hinweggeblasen wird. Vorteilhaft ist es, wenn die Neigung des Brenners bzw. der Brennerdüsen nach der Umkehrung der Querbewegung ebenfalls umgekehrt wird. Die Brennerdüsen können bei Erreichen der jeweiligen Endstellung so umgeschaltet werden, daß sie in die jeweils entgegengesetzte Richtung zeigen.

Die oben angegebene Aufgabe wird ferner dadurch gelöst, daß eine Vorrichtung, bestehend aus einem Brenner oder einem Stockwerkzeug oder einem sonstigen Oberflächenbearbeitungswerkzeug und einer Transportbahn zum geradlinigen Fördern von Werkstücken, vorzugsweise Steine, wobei das Oberflächenbearbeitungswerkzeug an einem in Werkstück-Förderrichtung bewegbaren Support angeordnet ist, der mit einem quer zur Werkstück-Förderrichtung bewegbaren Schlitten verbunden ist, zur Durchführung des erfindungsgemäßen Verfahrens verwendet wird.

Der Brenner weist vorzugsweise einen Düsenstock mit mehreren in Werkstück-Förderrichtung nebeneinander liegenden Düsen auf. Das Stockwerkzeug weist vorzugsweise einen Hammerstock mit mehreren in Werkstück-Förderrichtung nebeneinander liegenden Stockhämmern auf.

Die Transportbahn kann aus einem Rollgang mit mehreren parallelen, drehbaren, vorzugsweise gekühlten Rollen bestehen. Die Rollen können von einem Kühlmedium, vorzugsweise Wasser, durchströmt werden. Das Kühlmedium kann vorzugsweise über seitliche Öffnungen in den Rollen nach beiden Seiten frei abfließen.

Vorteilhaft ist es, wenn die Rollenenden von einer gemeinsamen Rollenkette wechselweise umschlungen und angetrieben werden, wobei die Rollenkette vorzugsweise ständig gespannt und bruchüberwacht ist. Die einzelnen Rollen des Rollganges besitzen an ihren Enden vorzugsweise Antriebskettenräder. Diese werden über eine gemeinsame Rollenkette angetrieben. Die Rollenkette kann über eine Gegenrolle mit Spanngewicht ständig gespannt sein. Der Spannzustand der Rollenkette kann über einen Grenztaster überwacht werden (Bruchüberwachung).

Eine weitere vorteilhafte Weiterbildung ist gekennzeichnet durch eine Formerkennungsvorrichtung zum Erkennen der Werkstückform, insbesondere der Ausdehnung der Werkstücke in Richtung quer zur Werkstück-Förderrichtung. Über dem Rollgang kann eine Grenztasterformation im Koordinatensystem angeordnet sein, die die jeweilige Form des daran vorbeigeführten Werkstückes erkennen kann.

Vorteilhaft ist es, wenn der Brenner bzw. die Brennerdüsen zur Werkstückoberfläche geneigt angeordnet sind, wobei diese Neigung (Anstellwinkel) vorzugsweise verstellbar und/oder umschaltbar bzw. umkehrbar ist. Die Neigungsverstellung (Verstellung des Anstellwinkels) kann durch eine pneumatische Kolben-Zylinder-Einheit oder durch einen Drehmagneten bewirkt werden.

Eine weitere vorteilhafte Weiterbildung ist dadurch gekennzeichnet, daß der Brenner und/oder die Brennerdüsen und/oder der Düsenstock und/oder ggf. die Neigungsverstellungsvorrichtung gekühlt, vorzugsweise wassergekühlt sind. Vorteilhaft ist es, wenn das Kühlwasser die einzelnen Vorrichtungen parallel und/oder in Reihe durchströmt. Es ist also nur ein einziger Kühlkreislauf vorhanden, der alle zu kühlenden Teile erfaßt.

Nach einer weiteren vorteilhaften Weiterbildung sind sowohl ein Brenner als auch ein Stockwerkzeug vorhanden.

An einem Schlitten können mehrere Supports angeordnet sein.

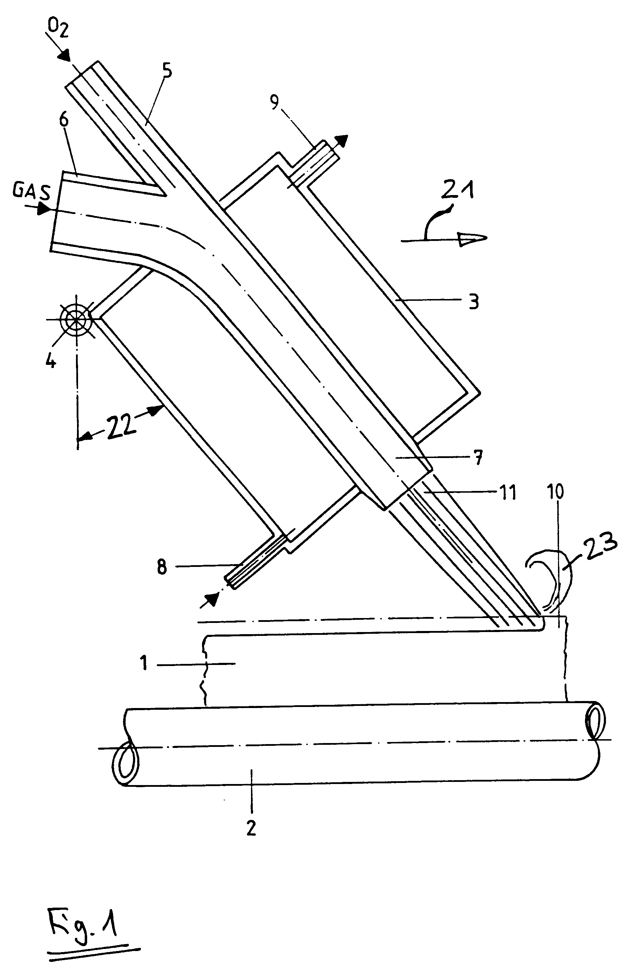

Es wurde ein neuer, wassergekühlter, um eine horizontale Achse durch Umschaltung drehbarer Düsenstock entwickelt (siehe Abbildung 1), bei dem eine Vielzahl von Düsen unmittelbar nebeneinander angeordnet werden. Zur Kühlung ist ein wasserdurchströmter Behälter vorhanden, in dessen Boden die Düsen so befestigt sind, daß zu dem zu bearbeitenden Werkstück hin die jeweiligen Düsenöffnungen nur durch die Düsenrohrwandungen voneinander getrennt sind. Diese Anordnung hat einerseits den Vorteil, daß mit dem so auf die zu bearbeitende Oberfläche auftreffenden Mehrfachflammen-Strahl eine viel größere Fläche als bisher beflammt werden kann. Die Besonderheit der Anordnung des Kühlsystems ermöglicht eine mehrstufige Ausnutzung der Kühlflüssigkeit. Zuerst wird die die Brennerdüsen umschaltende Vorrichtung gekühlt, sodann durchfließt die Kühlflüssigkeit den die Brennerdüsen tragenden Behälter und trifft dann auf den geflammten Teil der Steinoberflächen. Der weitere Vorteil dieser Düsenanordnung ist, daß zwischen den einzelnen Flammstrahlen keine unbearbeiteten Flächen entstehen, wenn die Flammen über die Steinoberflächen geführt werden.

Der Transport der Steinplatten erfolgt stetig stufenlos und nicht mehr ruckartig. Dies wird dadurch erreicht, daß sich der brennertragende Support in die gleiche Richtung bewegt und in der gleichen Geschwindigkeit bewegt wird wie die sich vorwärts bewegenden Steine. Bei der rechtwinklig zur Vorschublinie verlaufenden Brennstrahlbewegung in Verbindung mit dem Schlitten beschreiben die Brennerdüsen auf dem Maschinenrahmen bezogen zwar eine Diagonale, hinterlassen aber auf der Steinoberfläche rechtwinklig zur Steinbewegungsrichtung verlaufende Geraden. Wäre nur eine Brennerdüse vorhanden, so wie bei den bisher gebauten Maschinen, so entstünde eine gebrannte Fläche von der Breite des Brennflammenstrahls. Die neue Erfindung geht von der Anordnung von 1 bis 4 und mehr Brennstrahldüsen aus. Die Stellung dieser Düsen ist in einem dem jeweils zu bearbeitenden Material angepaßten und veränderbaren Anstellwinkel so gerichtet, daß sie in Richtung der Bewegung des den Support tragenden Schlittens zeigen. Der Abbrand wird durch die Strömungsgeschwindigkeit der Gase seitlich von den Oberflächen entfernt.

Hieraus folgt, daß die Stellung der Brennerdüsen zur Oberfläche, nachdem sie die Steinoberflächen in einer Richtung überquert haben, vor dem Zurücklaufen in die Ursprungsposition geändert werden muß. Die Düsen werden daher nach dem Erreichen der Endposition umgeschaltet und weisen nun in die Gegenrichtung. Die Stellung der Brennerdüsen kann in und gegen die Transportrichtung des Schlittens gerichtet sein. Die Anordnung mehrerer Düsen hat zudem den Vorteil, daß bei einer Überquerung der zu bearbeitenden Oberfläche, gegenüber den bisher gebauten Maschinen, die vielfache Leistung erzielt wird. Da die Steine immer in einer Richtung weiterbewegt werden und die Brennerdüsen nach einer Überquerung in der gegenüberliegenden Richtung stehen, müssen die Brennerdüsen vor der Bewegung in die ursprüngliche Stellung durch Bewegung des Supports in die Ursprungsposition abzüglich eines Teiles der Bearbeitungsbreite zurückgesetzt werden, so daß keine unbearbeitete Fläche zurückbleibt, es sei denn, daß beabsichtigt wird, eine gewisse Fläche unbearbeitet zu lassen und dadurch ein bestimmtes Oberflächenmuster zu erreichen. Danach läuft der gleiche Bewegungsvorgang ab wie bei dem Vorlauf, nur daß der Schlitten nun in die entgegengesetzte Richtung zurückläuft. Sodann wiederholen sich die Vorgänge: Zurücksetzen des Supports mit Berücksichtigung des Steinvorschubweges, Vorlauf des Supports synchron mit der Steinvorlaufgeschwindigkeit und Querlauf des Schlittens bis in die Gegenposition.

Vorteilhaft ist weiterhin, daß ein Support mit zwei so angeordneten Düsenstöcken ausgerüstet ist, daß durch das Zurücklegen von nur der Hälfte des bisher erforderlichen Schlittenweges die gesamte Rollgangbreite beflammt werden kann. Dieses System ist insbesondere dann vorteilhaft anzuwenden, wenn die Werkstückaufgabe des Rollganges geteilt ist.

Die Rollgänge werden wassergekühlt, aus hochhitzebeständigem Stahl, oder mit einer hochhitzebeständigen Schutzschicht versehen. Da sich die Rollgänge gegenüber der bekannten Technik ständig drehen und nicht mehr ruckartig vorwärtsbewegt werden, ist eine effektive Kühlung der mit den Flammen in Berührung kommenden Rollenoberflächen möglich. Dabei kann das Kühlwasser durch die Rollen der Rollgänge geführt werden, die Rollen der Rollgänge können aber auch in einem Wasserbad laufen. Hierdurch wird eine erheblich längere Lebensdauer für die Rollgänge erreicht.

Ein weiterer Vorteil der Erfindung ist darin zu sehen, daß das Kühlwasser, das zum Kühlen der Brennerdüsen benötigt wird, vorher den pneumatisch betätigten Düsenumschaltzylinder kühlt, womit der Wasserverbrauch gesenkt wird.

Durch kontinuierlichen Vorschub ohne Stillstandszeiten wird der Gasverbrauch reduziert und die Durchsatzleistung vergrößert. Die vorliegende Erfindung weist als weiteren Vorteil einen Gall'schen Kettentrieb mit nur einer durchgehenden Kette auf. Über diese Kette sind alle Rollgänge mit Antriebsrädern miteinander verbunden und durch Kettenspannvorrichtung mit Kettenbruchsicherung mit minimalem Schlupf anzutreiben. Bei Maschinen, die nach der bisher bekannten Art betrieben werden, bleiben bei einem Kettenbruch in Richtung des Triebes die Rollgänge stehen, ohne daß die Antriebssicherung anspricht.

Wenn ein Stockwerkzeug verwendet wird, erfolgt die Betätigung der Stockhämmer über elektrische Hubmagnete oder pneumatische Stellzylinder. Ölbetätigte Stellglieder sind bei der Steinbearbeitung unerwünscht, da bei Leckagen auf den bearbeiteten Oberflächen unerwünschte Verunreinigungen entstehen können.

Ausführungsbeispiele der Erfindung werden nachstehend anhand der beigefügten Zeichnung im einzelnen erläutert. In der Zeichnung zeigt
- Fig. 1: eine Flammvorrichtung in einer Seitenansicht,
- Fig. 2: eine Flammvorrichtung in einer perspektivischen Ansicht,
- Fig. 3: ein weiteres Ausführungsbeispiel einer erfindungsgemäßen Vorrichtung in einer in Bewegungsrichtung (Vorschubrichtung) der Werkstücke gesehenen Seitenansicht und
- Fig. 4: die in Fig. 3 dargestellte Vorrichtung in einer Seitenansicht quer zur Werkstück-Vorschubrichtung.

Wie aus Fig. 1 ersichtlich, wird ein zu bearbeitender Stein 1 auf Rollgängen 2 gefördert, und zwar in einer Richtung senkrecht zur Zeichenebene der Fig. 1. Oberhalb des Steines befindet sich der Düsenstock 3, der um eine horizontal verlaufende Achse 4 schwenkbar gelagert ist. Hierdurch ist eine Winkelverstellung und Umschaltung des Düsenstocks 3 möglich. An der Oberseite des Düsenstocks 3 wird über eine erste Rohrleitung 5 Sauerstoff und über eine zweite Rohrleitung 6 Gas zugeführt. An der Unterseite des Düsenstocks 3 befinden sich die Düsenöffnungen 7. Der Düsenstock 3 ist wassergekühlt, wobei das Kühlwasser durch den Rohrstutzen 8 in den Düsenstock eintritt und über den Rohrstutzen 9 aus dem Düsenstock wieder austritt. Das Kühlwasser gelangt anschließend auf die Steinoberfläche 10. Die aus den Düsenöffnungen 7 austretende Flamme 11 trifft im Winkel auf die Steinoberfläche 10 auf. Der Düsenstock 3 wird in Querrichtung 21 bewegt. Weiterhin sind der Düsenstock 3 und damit die Düsen 7 um den Winkel 22 derart geneigt, daß der Abbrand 23 seitlich über den Werkstückrand hinweggeblasen wird.

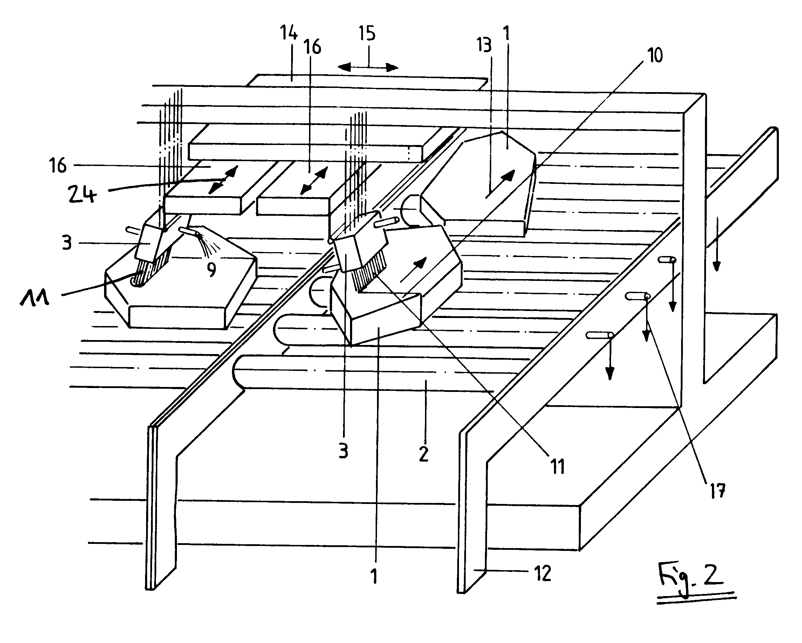

Die Fig. 2 zeigt die Flammvorrichtung in einer perspektivischen Ansicht. Auf dem Gestell 12 sind die Rollgänge 2 drehbar gelagert. Die Steine 1 werden auf den Rollgängen 2 in Transportrichtung (Werkstück-Vorschubrichtung) 13 bewegt. Es sind zwei Düsenstöcke 3 vorgesehen. Jeder Düsenstock 3 ist mit einem Support 16 verbunden, der in horizontaler Richtung 24 parallel zur Transportrichtung (Werkstück-Vorschubrichtung) 13 hin- und herbewegbar ist. Die Supports 16 sind mit einem (gemeinsamen) Schlitten 14 verbunden, der in horizontaler Richtung 15 quer zur Transportrichtung (Werkstück-Vorschubrichtung) 13 hin- und herbewegbar ist. Durch die Überlagerung der Supportbewegung 24 mit der Schlittenbewegung 15 wird erreicht, daß sich die Flammen 11 relativ zu den Steinen 1 nicht in Transportrichtung bewegen. Die Rollen 2 werden von Kühlwasser 17 durchströmt. Das Kühlwasser kann über seitliche Öffnungen 17 in den Rollen 2 nach beiden Seiten frei abfließen.

Wie aus Fig. 2 ersichtlich, weist der Brenner 3 mehrere in Werkstück-Förderrichtung 13 nebeneinander liegende Düsen auf. Jeder Brenner 3 wird in Richtung 15 quer zur Förderrichtung 13 der Werkstücke 1 bewegt. Dieser Querbewegung 15 des Brenners 3 wird eine Bewegung 24 in Förderrichtung 13 der Werkstücke 1 überlagert, deren Geschwindigkeit der Geschwindigkeit in Förderrichtung 13 der Werkstücke 1 entspricht. Der Brenner 3 wird nach dem Überqueren des Werkstücks 1 entgegen der Werkstück-Förderrichtung 13 zurückgesetzt. Anschließend überquert der Brenner 3 das Werkstück 1 erneut mit überlagerter Längsbewegung 24, wobei diese erneute Querbewegung 15 der ursprünglichen Querbewegung entgegengesetzt ist. Der Brenner 3 wird derart entgegen der Werkstück-Förderrichtung 13 zurückgesetzt, daß die in Querrichtung 15 auf dem Werkstück 1 verlaufenden Bearbeitungsbahnen nahtlos aneinander anschließen.

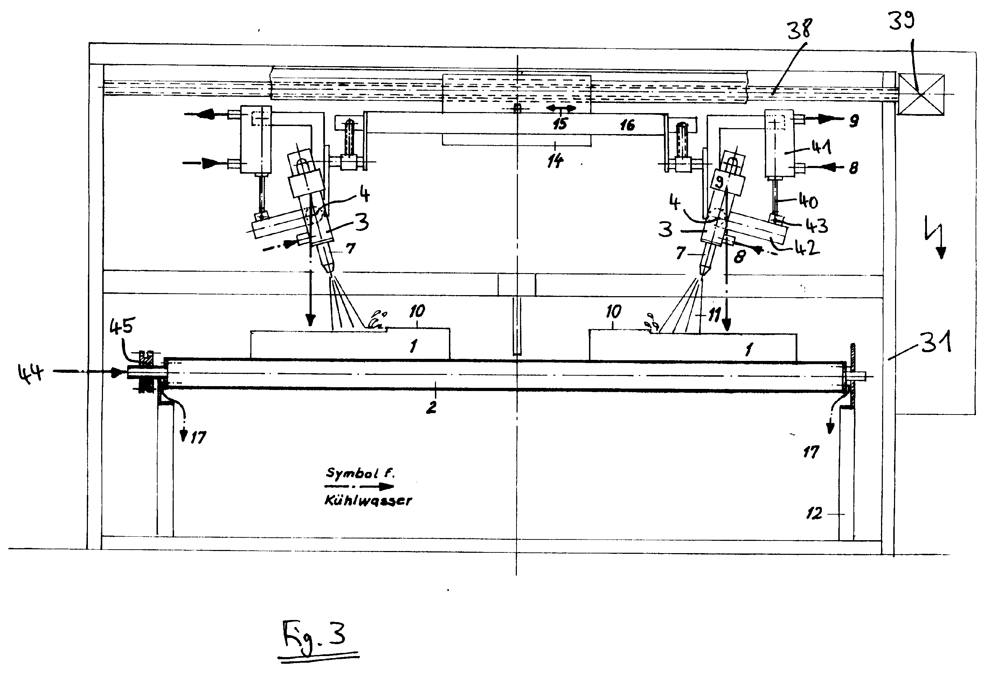

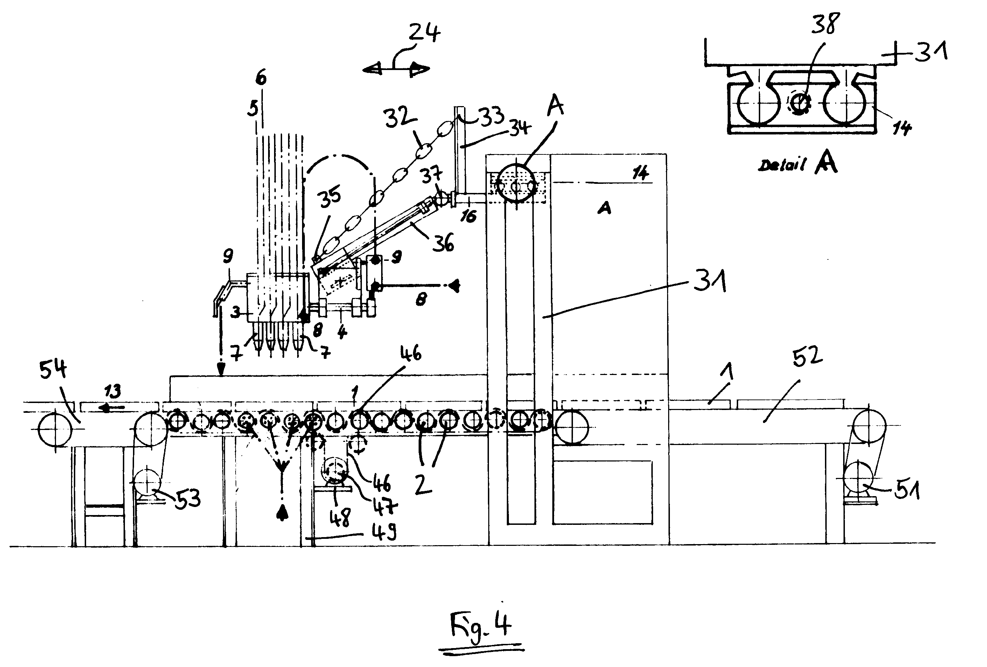

Die Fig. 3 und 4 zeigen ein weiteres Ausführungsbeispiel. Bestandteile, die denjenigen der Fig. 1 und 2 entsprechen, sind mit den gleichen Bezugszeichen versehen, so daß sie nicht erneut beschrieben werden müssen. Die Transportbahn, bestehend aus einem Rollengang mit einzelnen Rollen 2, läuft durch den portalförmigen Maschinenrahmen 31. Zwei Brenner 3 mit in Werkstück-Förderrichtung 13 nebeneinander angeordneten Brennerdüsen 7 sind an jeweils einem Support 16 angeordnet. Der Support 16 ist als gemeinsamer Support ausgebildet. Der Support 16 ist mit einem in Richtung 15 quer zur Werkstück-Förderrichtung 13 bewegbaren Schlitten 14 verbunden. Der Brenner 3 kann gehoben und abgesenkt werden. Hierfür ist eine Kette 32 vorhanden, deren oberes Ende 33 mit einer vom Support 16 nach oben weisenden Stange 34 verbunden ist und deren unteres Ende 35 mit einer Teleskopstange 36 verbunden ist, die an dem Support 16 durch ein Gelenk 37 drehbar gelagert ist. Durch eine Verschiebung des oberen Aufhängepunktes 33 der Kette 32 kann der Brenner 3 abgesenkt oder angehoben werden.

Die Bewegung des Schlittens 14 in Richtung 15 quer zur Werkstück-Vorschubrichtung 13 erfolgt durch eine den Schlitten 14 durchgreifende, von dem Motor 39 angetriebene Spindel 38.

Jeder Brenner 3 ist um die Achse 4 schwenkbar gelagert, um den auf die Oberfläche 10 des Werkstücks 1 auftreffenden Brennerstrahl in der Neigung verstellen zu können. Die Neigungsverstellung erfolgt durch eine Kolben(40)-Zylinder(41)-Einheit, deren Kolbenstange 40 mit einem Hebel 42 gelenkig 43 verbunden ist.

Die parallelen, drehbaren Rollen 2 sind hohl ausgeführt, so daß sie von Kühlwasser durchströmt werden können. Das Kühlwasser strömt bei 44 ein und kann über seitliche Öffnungen in den Rollen 2 nach beiden Seiten frei abfließen (Bezugszeichen 17). An einem Ende jeder Rolle 2 befindet sich jeweils ein Antriebskettenrad 45. Die Rollenenden werden an diesen Antriebskettenrädern von einer gemeinsamen Rollenkette 46 wechselweise umschlungen und dadurch in gleicher Richtung angetrieben. Die Rollenkette 46 wird über eine Gegenrolle 47 mit Spanngewicht 48, das an einem Ständer 49 vertikal geführt ist, ständig gespannt. Der Spannzustand wird über einen in der Zeichnung nicht gezeigten Grenztaster überwacht, so daß die Rollenkette bruchüberwacht ist.

Die Kühlwasserversorgung ist in den Fig. 3 und 4 stichpunktiert dargestellt. Das Kühlwasser strömt bei 8 in den pneumatischen Zylinder 41 ein und verläßt diesen wieder bei 9. Das Kühlwasser strömt in den Brenner 3 ebenfalls bei 8 ein und bei 9 aus. Es gelangt von dort auf die Oberfläche 10 der Steine 1.

Die Steine 1 werden dem Rollengang durch einen von einem Motor 51 angetriebenen Zuförderer 52 zugeführt und von diesem mittels eines Abförderers 54 abtransportiert, der von einem weiteren Motor 53 angetrieben wird.

## Patentansprüche

1. Verfahren zum Bearbeiten der vorzugsweise ebenen Oberflächen (10) von Werkstücken (1), vorzugsweise Steinen, durch Brennen oder Stocken oder einen ähnlichen Oberflächenbearbeitungsvorgang mittels eines Brenners (3) bzw. eines Stockwerkzeuges bzw. eines sonstigen Oberflächenbearbeitungswerkzeuges,
bei dem die zu bearbeitenden Werkstücke (1) geradlinig gefördert (13) werden,
bei dem der Brenner (3) bzw. das Stockwerkzeug bzw. das sonstige Oberflächenbearbeitungswerkzeug quer zur Förderrichtung (13) der Werkstücke (1) bewegt wird,
bei dem dieser Querbewegung (15) des Brenners (3) bzw. des Stockwerkzeuges bzw. des sonstigen Oberflächenbearbeitungswerkzeuges eine Bewegung (24) in Förderrichtung (13) der Werkstücke (1) überlagert wird, deren Geschwindigkeit der Geschwindigkeit in Förderrichtung (13) der Werkstücke (1) entspricht,
und bei dem der Brenner (3) bzw. das Stockwerkzeug bzw. das sonstige Oberflächenbearbeitungswerkzeug nach dem Überqueren des Werkstücks (1) entgegen der Werkstück-Förderrichtung (13) zurückgesetzt wird und anschließend das Werkstück (1) erneut in entgegengesetzter Richtung quer zur Förderrichtung (13) der Werkstücke (1) mit überlagerter Längsbewegung überquert.

2. Verfahren nach Anspruch 1, dadurch gekennzeichnet, daß das Oberflächenbearbeitungswerkzeug (3) derart zurückgesetzt wird, daß die in Querrichtung (15) auf dem Werkstück (1) verlaufenden Bearbeitungsbahnen nahtlos aneinander anschließen.

3. Verfahren nach Anspruch 1, dadurch gekennzeichnet, daß das Oberflächenbearbeitungswerkzeug (3) derart zurückgesetzt wird, daß die in Querrichtung (15) auf dem Werkstück (1) verlaufenden Bearbeitungsbahnen sich überlappen oder voneinander beabstandet sind.

4. Verfahren nach einem der vorhergehenden Ansprüche, dadurch gekennzeichnet, daß die Vorschubgeschwindigkeit der Werkstücke (1) in Abhängigkeit von der Form der Werkstücke gesteuert wird.

5. Verfahren nach einem der vorhergehenden Ansprüche, dadurch gekennzeichnet, daß der Brenner (3) bzw. das Stockwerkzeug bzw. ggf. das sonstige Oberflächenbearbeitungswerkzeug beim Zurücksetzen und/oder in Abhängigkeit von der Form der Werkstücke eingeschaltet und ausgeschaltet wird.

6. Verfahren nach einem der vorhergehenden Ansprüche, dadurch gekennzeichnet, daß der Brenner (3) bzw. die Brennerdüsen (7) schräg (22) auf die Werkstück-Oberfläche (10) gerichtet sind.

7. Verfahren nach Anspruch 6, dadurch gekennzeichnet, daß der Brenner (3) derart geneigt (22) ist, daß der Abbrand (23) seitlich über den Werkstückrand hinweggeblasen wird.

8. Verfahren nach einem der vorhergehenden Ansprüche, dadurch gekennzeichnet, daß die Neigung (22) des Brenners (3) bzw. der Brennerdüsen (7) nach der Umkehrung der Querbewegung (15) umgekehrt wird.

9. Verwendung einer Vorrichtung, bestehend aus
einem Brenner (3) oder einem Stockwerkzeug oder einem sonstigen Oberflächenbearbeitungswerkzeug
und einer Transportbahn zum geradlinigen Fördern von Werkstücken (1), vorzugsweise Steinen,
wobei das Oberflächenbearbeitungswerkzeug (3) an einem in Werkstück-Förderrichtung (13) bewegbaren Support (16) angeordnet ist, der mit einem quer (15) zur Werkstück-Förderrichtung (13) bewegbaren Schlitten (14) verbunden ist,
zur Durchführung des Verfahrens nach einem der Ansprüche 1 bis 8.

## Claims

1. Process for treating the preferably flat surfaces (10) of workpieces (1), preferably stones, by burning or scabbling or a similar surface-treatment procedure using a burner (3) or scabbling tool or other surface-treatment tool,
in which the workpieces (1) to be treated are conveyed (13) in a straight line,
in which the burner (3) or scabbling tool or other surface-treatment tool is moved transversely to the direction of conveyance (13) of the workpieces (1),
in which there is superimposed upon this transverse movement (15) of the burner (3) or scabbling tool or other surface-treatment tool a movement (24) in the direction of conveyance (13) of the workpieces (1), the velocity of which corresponds to the velocity in the direction of conveyance (13) of the workpieces (1)
and in which the burner (3) or scabbling tool or other surface-treatment tool, after having crossed over the workpiece (1), is reset counter to the direction of conveyance (13) of the workpiece and then crosses over the workpiece (1) again in the opposite direction, transversely to the direction of conveyance (13) of the workpieces (1), by virtue of a superimposed longitudinal movement .

2. Process according to Claim 1, characterized in that the surface-treatment tool (3) is reset such that the treatment paths running in the transverse direction (15) on the workpiece (1) are adjoined to one another in a seamless manner.

3. Process according to Claim 1, characterized in that the surface-treatment tool (3) is reset such that the treatment paths running in the transverse direction (15) on the workpiece (1) overlap one another or are spaced apart.

4. Process according to one of the preceding claims, characterized in that the advancement velocity of the workpieces (1) is controlled in dependence on the shape of the workpieces.

5. Process according to one of the preceding claims, characterized in that the burner (3) or scabbling tool or, where appropriate, other surface-treatment tool is switched on and switched off upon being reset and/or in dependence on the shape of the workpieces.

6. Process according to one of the preceding claims, characterized in that the burner (3) or burner nozzles (7) are directed obliquely (22) at the workpiece surface (10).

7. Process according to Claim 6, characterized in that the burner (3) is inclined (22) such that the burn-off (23) is blown away laterally over the edge of the workpiece.

8. Process according to one of the preceding claims, characterized in that the inclination (22) of the burner (3) or of the burner nozzles (7) is reversed following the reversal of the transverse movement (15).

9. Use of a device, comprising
a burner (3) or scabbling tool or other surface-treatment tool
and a conveyor lane for the straight-line conveyance of workpieces (1), preferably stones,
the surface-treatment tool (3) being disposed on a support (16) which is movable in the direction of conveyance (13) of the workpiece and is connected to a slide (14) which can be moved transversely (15) to the direction of conveyance (13) of the workpiece,
for the realization of the process according to one of Claims 1 to 8.

## Revendications

1. Procédé pour le façonnage des faces supérieures (10) de préférence planes de pièces de travail (1), de préférence de pierres, par brûlage ou par bouchardage ou par une opération d'usinage similaire de la face supérieure au moyen d'un brûleur (3) ou d'un outil formant boucharde ou d'un autre outil d'usinage de la face supérieure, dans lequel les pièces de travail à usiner (1) sont transportées de façon rectiligne (13), dans lequel le brûleur (3) ou l'outil formant boucharde ou l'autre outil d'usinage de la face supérieure est déplacé transversalement à la direction de transport (13) des pièces de travail (1), dans lequel on superpose à ce mouvement transversal (15) du brûleur (3) ou de l'outil formant boucharde ou de l'autre outil d'usinage de la face supérieure un mouvement (24) dans le sens de transport (13) des pièces de travail (1), dont la vitesse correspond à la vitesse dans le sens de transport (13) des pièces de travail (1), et dans lequel le brûleur (3) ou l'outil formant boucharde ou l'autre outil d'usinage de la face supérieure, après avoir traversé la pièce de travail (1), est ramené dans le sens contraire à la direction de transport (13) de la pièce de travail, et ensuite la pièce de travail (1) traverse de nouveau dans la direction opposée transversalement à la direction de transport (13) des pièces de travail (1), avec un mouvement longitudinal superposé.

2. Procédé selon la revendication 1, caractérisé en ce que l'outil d'usinage de la face supérieure (3) est ramené de telle façon que les bandes d'usinage s'étendant dans la direction transversale (15) sur la pièce de travail (1) s'applique sans joint les unes aux autres.

3. Procédé selon la revendication 1, caractérisé en ce que l'outil d'usinage de la face supérieure (3) est ramené de façon que les bandes d'usinage s'étendant dans la direction transversale (15) sur la pièce de travail (1) se chevauchent ou se trouvent à une certaine distance les unes des autres.

4. Procédé selon l'une des revendications précédentes, caractérisé en ce que la vitesse d'avance des pièces de travail (1) est commandée en fonction de la forme des pièces de travail.

5. Procédé selon l'une des revendications précédentes, caractérisé en ce que le brûleur (3) ou l'outil formant boucharde ou, le cas échéant, l'autre outil d'usinage de la face supérieure est mis en ou hors service lorsqu'on le ramène en arrière et/ou en fonction de la forme des pièces de travail.

6. Procédé selon l'une des revendications précédentes, caractérisé en ce que le brûleur (3) ou les buses du brûleur (7) sont orientées suivant une inclinaison (22) sur la face supérieure (10) de la pièce de travail.

7. Procédé selon la revendication 6, caractérisé en ce que le brûleur (3) est incliné (22) de façon que le résidu (23) est soufflé latéralement sur le bord de la pièce de travail.

8. Procédé selon l'une des revendications précédentes, caractérisé en ce que l'inclinaison (22) du brûleur (3) ou des buses (7) du brûleur est inversée après l'inversion du mouvement transversal (15).

9. Utilisation d'un dispositif comprenant un brûleur (3) ou un outil formant boucharde ou un autre outil d'usinage de la face supérieure et une bande de transport pour le transport rectiligne de pièces de travail (1), de préférence de pierres, dans lesquelles l'outil d'usinage de la face supérieure (3) est disposé à un support (16) déplaçable dans la direction de transport (13) de la pièce de travail, qui est relié à un chariot (14) déplaçable transversalement (15) à la direction de transport (13) de la pièce de travail, pour la mise en oeuvre du procédé selon l'une des revendications 1 à 8.
